# EUROPEAN PATENT APPLICATION

(11) **EP 2 543 806 A1**
(43) Date of publication of application: **09.01.2013**
(21) Application number: 11172535.4
(22) Date of filing: 04.07.2011
(51) Int. Cl.: E05D 5/14

(54) **Household appliance with an improved hinge assembly**

(71) Applicant: Electrolux Home Products Corporation N.V., 1130 Brussel (BE)
(72) Inventor: Sartor, Luciano, 33080 Porcia (PN) (IT); Noviello, Flavio, 33080 Porcia (PN) (IT)
(74) Representative: Nardoni, Andrea

(57) **Abstract**

The present invention relates to a household appliance having an article treating chamber provided with an improved hinge assembly for a door that opens/closes said chamber. A household appliance according to the invention comprises a cabinet (15) and a door (3) connected to the cabinet (15) through a hinge assembly (5) so as to open/close an article treating chamber (16), said hinge assembly (5) comprises a shaft (8), a hinge seat (6) and a bush (9) arranged between the shaft (8) and the seat (6). The household appliance is **characterized in that** the bush (9) comprises a slit (13) and at least one rib (14, 18) that, when the bush (9) is mounted on the hinge assembly, radially modify the bush (9) shape such that the bush (9) completely fits the clearance between the shaft (8) and the seat (6). A bush (9) for a hinge assembly (5) of a household appliance and a door hinge assembly (5) for a household appliance are also disclosed.

## Description

### Field of technology

The present invention relates to a household appliance having an article treating chamber provided with an improved hinge assembly for a door that opens/closes said chamber. In particular said household appliance may be a water bearing machine, such as a laundry washing and/or drying machine, a dishwasher, or a food cooking device such as an oven.

### Background

Generally, at a front cabinet wall of a water bearing machine, like a laundry treating machine for example, an aperture is provided, through which laundry is introduced into a rotating drum for carrying out a washing and/or a drying process thereon .

A door is hingedly mounted on said front cabinet wall to close and open the article treating chamber loading aperture.

Currently, assembling the door to a cabinet wall of a household appliance having an article treating chamber for allowing/preventing access thereto, is made by using a hinge assembly, in which a bush, preferably made of a polymeric antifriction material, is placed between a hinge seat associated to the appliance cabinet and a shaft, or pin associated to said door, in order to reduce friction between rotating and stationary parts.

In a hinge assembly of such known type, a clearance exists between the bush and the hinge seat and/or between the shaft and the bush. Said clearance is due to the radial dimensional tolerances of elements (the hinge seat, the shaft and the bush itself) reciprocally coupled. While a radial dimension of the shaft, which is ordinarily made by metal, may be easily controlled and therefore its dimensional tolerances may be rather strict, a radial dimension of the hinge seat and that of the bush itself, which are generally made by a polymeric material through an injection molding process, may be difficult to be controlled due to the shrink of polymeric material during forming process. The radial dimensional tolerances of the hinge seat and those of the bush are therefore rather rough and, in any case, greater than those of the shaft.

A clearance existing between the bush and the hinge seat and/or between the pin and the bush causes an irregular and not precise rotation of the door during opening and closing and swinging effects of the door, and/or of the shaft, around an axis transversal to the door pivotal shaft mounted on the hinge seat.

A swinging behavior of the door may disadvantageously cause an imperfect adherence of the door itself onto the article treating chamber loading aperture, with the undesired result that the treating chamber is not perfectly closed during the treating process carried out by the appliance. An improved solution which makes the door more stable and precise in moving from/to the article treating chamber loading aperture of a household appliance would be highly appreciated.

### Objects of the disclosure

It is an object of the present disclosure to overcome at least some of the problems associated with the prior art.

A further object of the present invention is to provide a household appliance having a hinge assembly whose functionality remains unaltered even after a relatively large number of working cycles.

Another object of the invention is to provide a household appliance having a hinge assembly wherein dimensions of its components being outside of a predetermined range of dimensional tolerance may be easily compensated without compromising hinge assembly functionality.

Still another object of the present invention is to make easier and more reliable the assembly process of a hinge assembly for a door that closes/opens an article treating chamber loading aperture of a household appliance.

Another object of the invention is to provide a door hinge assembly for a household appliance having an improved reliability.

Still another object of the present invention is to provide a bush for a hinge assembly of a household appliance that can fit completely a clearance between a shaft, or pin, and a hinge seat even if dimensions of said components are outside of a predetermined range of dimensional tolerances.

### Summary

The present disclosure provides a household appliance, a household appliance door hinge and a bush for a door hinge of a household appliance as set out in the accompanying claims.

According to one aspect of the present invention there is provided a household appliance comprising a cabinet and a door connected to the cabinet through a hinge assembly so as to open/close an article treating chamber, said hinge assembly comprising a shaft, or pin, a hinge seat and a bush arranged between the shaft and the seat, the household appliance being characterized in that the bush comprises a slit and at least one rib that, when the bush is mounted on the hinge assembly, radially modify the bush shape such that the bush completely fits the clearance between the shaft and the seat.

The at least one rib can be formed on the outer surface, or on the inner surface or on both the outer and the inner surfaces of the bush. In a preferred embodiment they can extend longitudinally along the bush.

In an embodiment of the present invention the slit extends longitudinally along the bush.

In a further embodiment of the invention the bush includes an elongated tubular portion and a flange, the at least one rib being made on said elongated tubular portion.

In another embodiment of the present invention the flange forms a stop surface on the bush.

In a further embodiment of the invention the bush includes a taper at one end, opposite to the flange, to facilitate introduction of the bush into the hinge seat during assembly operations.

In another aspect of the present invention, a door hinge assembly including the bush described above is provided.

According to a further aspect of the present invention the household appliance is in the form of a food cooking machine, or a water bearing machine, such as a washing and/or drying machine, or a dishwasher.

The present invention further provides a bush for a hinge assembly of a household appliance including a pin or shaft and a hinge seat, the bush having a substantially cylindrical hollow body and being characterized by comprising a slit extending longitudinally along said cylindrical hollow body, and at least one rib, said slit and said at least one rib being adapted to radially modify the bush shape such that the bush completely fits the clearance between the shaft and the seat, when the bush is mounted on the hinge assembly.

The present invention further provides a door hinge assembly for a household appliance.

The present invention offers a number of benefits. One of the advantages is that with the bush according to a preferred embodiment of the present invention, no clearance is left between the bush and the hinge seat and between the bush and the hinge pin, and the household appliance door is stable, without any swinging effect. This feature is particularly advantageous because, when producing components of a hinge assembly, it may be difficult, or economically expensive, to precisely control dimensional tolerances of pieces to be reciprocally coupled. In addition, a household appliance according to the invention results to be improved in reliability because a correct and precise closure of an article treating chamber loading aperture is ensured. Also, a bush according to a preferred embodiment of the present invention is easy to mount and easy to produce, without increasing manufacturing cost and reducing productivity.

### Brief description of the drawings

Reference will now be made, by way of example, to the accompanying drawings, in which:
Figure 1 is a perspective view of a household appliance, in particular a laundry dryer, according to the present invention;
Figure 2 shows a detail of a hinge assembly of the household appliance of Figure 1;
Figure 3 is a perspective view of a bush according to a preferred embodiment of the present invention;
Figure 4 is a perspective top view of the bush according to a preferred embodiment of the present invention;
Figure 5 is a bottom view of the bush according to a preferred embodiment of the present invention;
Figure 6 is a side sectional view of a hinge assembly including the bush according to a preferred embodiment of the present invention.

### Detailed description of preferred embodiments

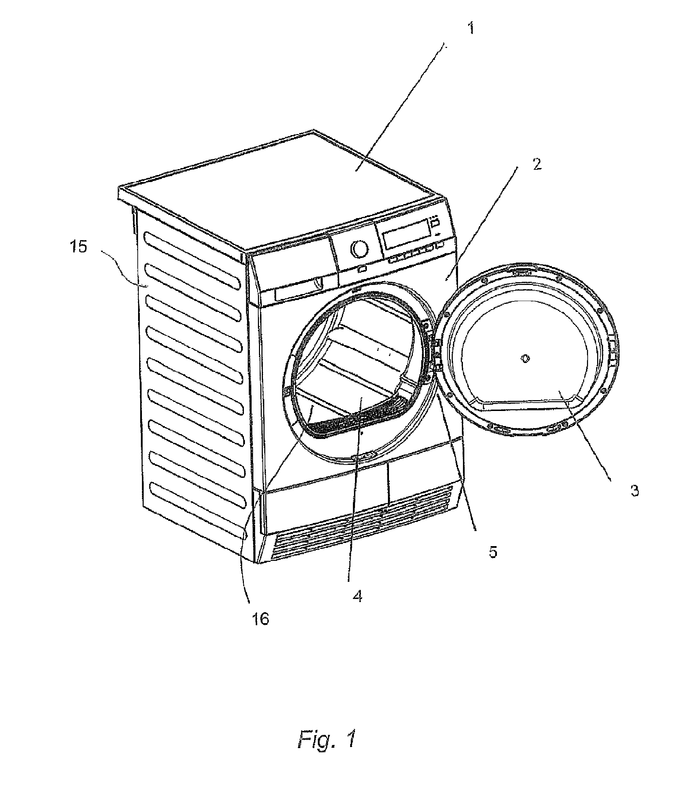

Referring to Figure 1, a household appliance according to the invention, embodied as a laundry drying machine 1 as a mere example, includes a cabinet 15 for containing operational devices of the machine, and a door 3, hinged to the front cabinet wall 2, to open/close an aperture 4 through which laundry is introduced into an article treating chamber 16 for carrying out a treating process, such as a drying cycle.

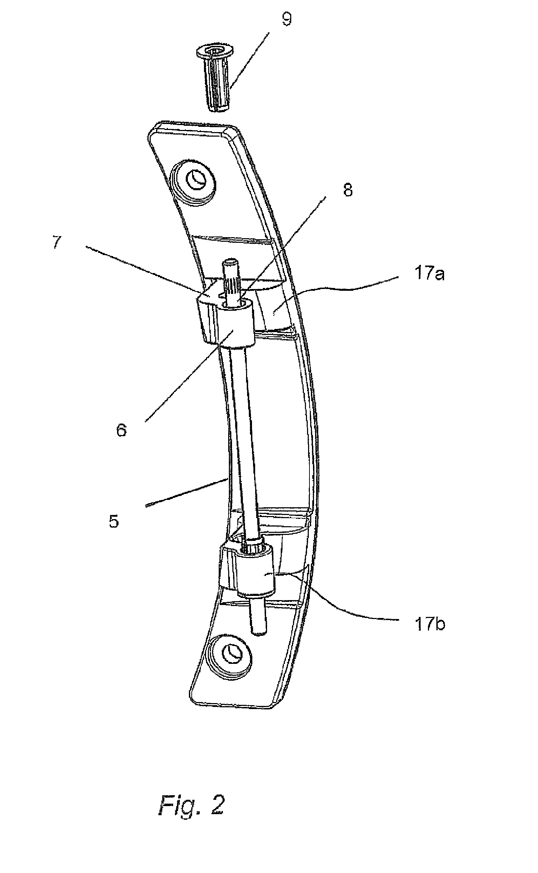

A hinge assembly 5, better shown in Figure 2, constrains the door 3 to the cabinet 15, thus providing the door with a degree of rotational freedom relative to the article treating chamber aperture 4.

The hinge assembly 5 includes a couple of identical hinge arrangements 17a, 17b vertically spaced apart from each other, each having a hinge seat 6, made at a free end of a hinge arm 7 extending from the side of the aperture 4, i.e. from the front cabinet wall 2 of the laundry drying machine 1, and a shaft (or pin) 8, designed to be passed through the hinge seat 6 of each hinge arrangements 17a, 17b and stably connected to the door 3 such that said door 3 does not rotate relative to the shaft 8.

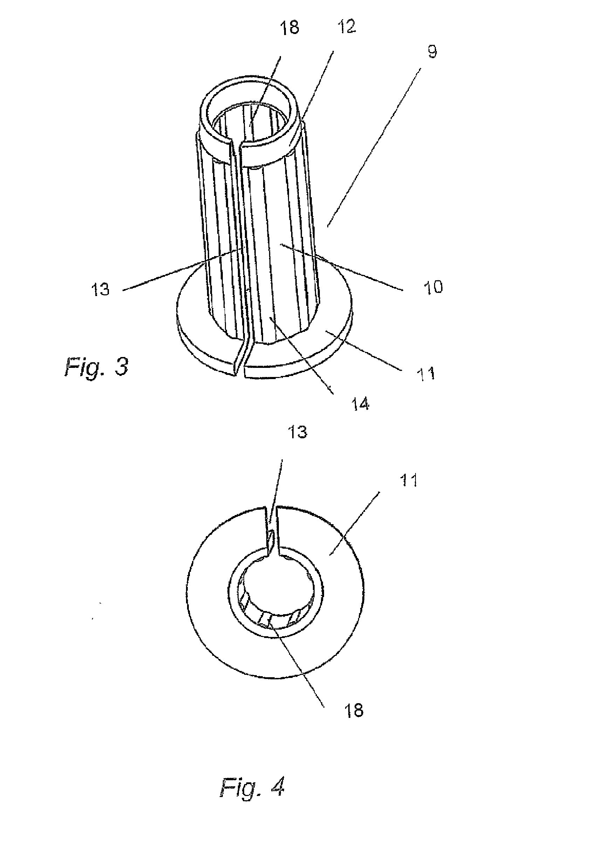

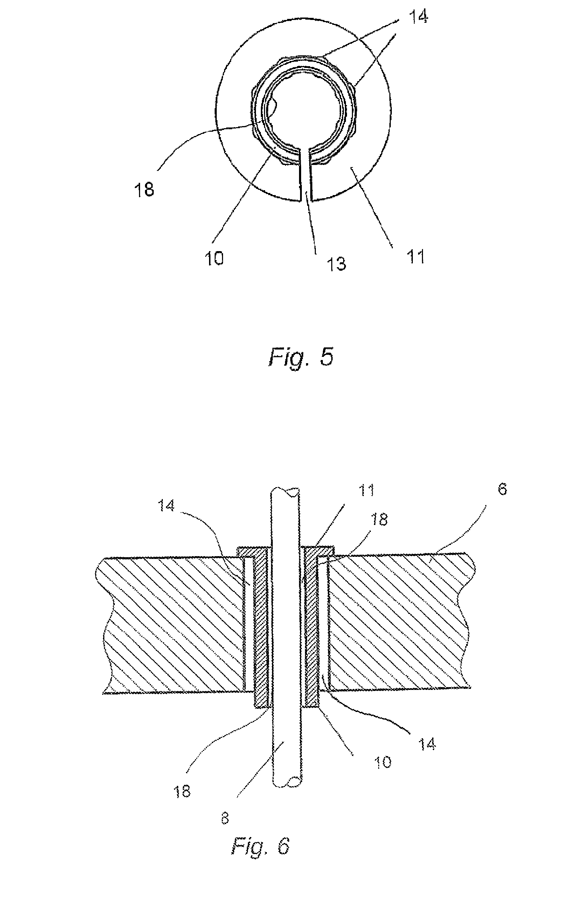

Shaft 8 is received within each hinge seat 6 and, in the clearance between the shaft 8 and each hinge seat 6, a bush 9 is placed to reduce friction. An embodiment of a bush according to the invention can be better seen in Figures 3 to 5, while in figure 6 it is shown a schematic view of the bush 9 mounted in the clearance between the shaft 8 and the hinge seat 6. Preferably, the bush 9 is made of a polymeric material, and most preferably of acetal resin (POM). The bush 9 has a substantially cylindrical body and includes an elongated tubular portion 10, which is the part designed for introduction between the hinge seat 6 and the pin 8, and a flange 11 protruding radially from the elongated tubular portion 10.

The flange 11 preferably forms a stop surface on the bush 9 when it is introduced into the hinge seat 6, as it can be clearly seen in Figure 6. A taper 12 is provided at the end of the bush 9 to facilitate introduction thereof into the hinge seat 6. According to the present invention, a slit 13 is formed along the bush 9. In this way, when the bush is mounted on the hinge assembly 5, the radial shape of the bush 9 may be modified and it can adapt to the clearance existing between the shaft 8 and the hinge seat 6 so as to completely fit, i.e. completely fill, said clearance. It is clear that, even if a wear of the hinge seat 6 and/or a wear of the shaft 8 are produced after a number of opening/closing movement of the hinge assembly 5, a bush 9 according to the invention can restore a no clearance coupling between the shaft 8 and the hinge seat 6 by self adjusting the radial shape of the bush 9 to the modified dimension of the clearance.

According to a preferred embodiment of the present invention the elongated tubular portion 10 has one or more ribs 14, 18 made on both the outer and the inner surface of the bush 9.

In a preferred embodiment the slit 13 extends longitudinally along the entire bush 9, and further preferably the slit 13 may be rectilinear and parallel to the longitudinal axis of the bush 9. However, it will be apparent to those skilled in the art, that the slit 13 could have shapes other than rectilinear, e.g. it could be diagonal, following a broken or a curve line, partly helical (along a portion of the circumference), or it could extend along only a part of the bush 9 rather than along its entire length.

In a preferred embodiment of the present invention said at least one rib 14, 18 extends longitudinally along bush 9, and further preferably the at least one rib 14, 18 may be rectilinear and parallel to the longitudinal axis of the bush 9. However, it is also within the scope of the present invention to provide one or more ribs 14, 18 which extend along different directions, e.g. they could be helical or extend circumferentially around the elongated tubular portion 10, or which are not continuous and staggered, or a combination of the above.

The thickness of the ribs 14, 18 is such that the outer and inner diameters of the bush, as defined by the ideal external and internal circumferences tangent to the ribs 14, 18, adapt and make a fit with the hinge seat 6 and the shaft, or pin 8 respectively.

Providing one or more ribs 14, 18 on both the outer and the inner surface of the bush is not to be intended as a limitation of the invention, as the ribs could be made on the inner surface only, without departure from the scope of the invention. Said one or more ribs could even be only on the outer surface of the bush 9, in this way a particular attention will be given to fit the clearance between the hinge seat 6 and the bush 9 that are ordinarily made by polymeric material whose dimensional tolerances are rather rough and therefore their dimensions may be not precisely controlled.

The bush 9 of the present invention is self regulating with respect to the hinge seat 6 and the pin 8 thanks to the radial modification of the bush 9 shape due to the interaction of one or more of the ribs 14, 18 with the hinge seat 6 and/or shaft 8 respectively, and to the elastic action allowed by the slit 13.

In fact, the bush 9 of the present invention is capable of adapting itself to the diameters of the hinge seat 6 and the pin 8 due to the presence of one or more ribs 14, 18, which define the outer and the inner diameters corresponding to, or slightly interfering with, the inner diameter of the hinge seat 6, and the outer diameter of the pin 8, respectively. For example, when a shaft 8 is inserted into a bush 9, it may interfere with one or more ribs 18 causing slit 13 to be enlarged and the shape of the bush 9 to be radially modified. Ribs 14, provided onto the outer surface of the bush 9, will fit the clearance between the bush 9 and the hinge seat 6.

This exact match, which is possible also due to the elastic action allowed by the slit 13, eliminates any clearance, which was left with the bush of prior art.

Accordingly, no swinging effects of the household appliance door occur while opening and closing and the door is stable and precise in its rotation relative to the appliance cabinet. This exact match is of great advantage while assembling the hinge assembly 5 and to recover the progressively increasing clearance between the shaft 8 and the hinge seat 6 caused by wear.

A bush 9, made in accordance with the present invention, can be easily produced using techniques which will be apparent to those skilled in the art, thus not affecting the manufacturing cost and the productivity.

It will be understood that, while in the foregoing reference was mainly made to a household appliance embodied in the form of a laundry dryer, the bush of the present invention is suitable for any hinge assembly for household appliances, such as a washing machine, a dishwashing machine, a food cooking machine, and in general for any apparatus having an article treating chamber provided with an aperture opened/closed by a door.

It will be appreciated that alterations and modifications may be made to the above without departing from the scope of the disclosure. Naturally, in order to satisfy local and specific requirements, a person skilled in the art may apply to the solution described above many modifications and alterations. Particularly, although the present disclosure has been described with a certain degree of particularity with reference to preferred embodiment(s) thereof, it should be understood that various omissions, substitutions and changes in the form and details as well as other embodiments are possible; moreover, it is expressly intended that specific elements described in connection with any disclosed embodiment of the disclosure may be incorporated in any other embodiment as a general matter of design choice.

For example, similar considerations apply if the components (e.g. door hinges) have different structure or include equivalent units. Also, it should be easily understood by those of skill in the art that the present invention may be extended to a large variety of household appliances not only to a laundry drying machine that has been used in the above description as mere example of how the present invention may be embodied.

## Claims

1. A household appliance comprising a cabinet (15) and a door (3) connected to the cabinet (15) through a hinge assembly (5) so as to open/close an article treating chamber (16), said hinge assembly (5) comprising a shaft (8), a hinge seat (6) and a bush (9) arranged between the shaft (8) and the seat (6), **characterized in that** the bush (9) comprises a slit (13) and at least one rib (14, 18) that, when the bush (9) is mounted on the hinge assembly, radially modify the bush (9) shape such that the bush (9) completely fits the clearance between the shaft (8) and the seat (6).

2. A household appliance according to claim 1 wherein the bush (9) has an elongated tubular body (10) and the at least one rib (14, 18) is made on a outer surface, or an inner surface or both the outer and the inner surfaces of said body (10).

3. A household appliance according to claim 1 or 2 wherein the at least one rib (14, 18) and/or the slit (13) extend longitudinally along the bush (9).

4. A household appliance according to claim 3 wherein slit (13) is rectilinear and parallel to the longitudinal axis of the bush (9).

5. A household appliance according to claim 3 wherein slit (13) is at least partly helical.

6. A household appliance according any claim 3 to 5 wherein said at least one rib (14, 18) is rectilinear and parallel to the longitudinal axis of the bush (9).

7. A household appliance according any claim 3 to 5 wherein said at least one rib (14, 18) is helical or extends circumferentially around an elongated tubular portion (10) of the bush (9).

8. A household appliance according to any preceding claim wherein the bush (9) comprises an elongated tubular portion (10), and a flange (11) protruding radially from the elongated tubular portion (10) and forming a stop surface for the introduction of the bush (9) into the hinge seat (6).

9. A household appliance according to claim 8 wherein the bush (9) comprises a taper (12) at one end of the bush opposite to said flange (11) to facilitate introduction of the bush into the hinge seat (6) during hinge assembly operations.

10. A household appliance according to any preceding claim **characterized by** being a water bearing machine or a food cooking device.

11. A bush (9) for a hinge assembly of a household appliance including a pin or shaft (8) and a hinge seat (6), the bush (9) having a substantially cylindrical hollow body (10, 11) and being **characterized by** comprising a slit (13) extending longitudinally along said cylindrical hollow body, and at least one rib (14, 18), said slit (13) and said at least one rib (14, 18) being adapted to radially modify the bush (9) shape such that the bush (9) completely fits the clearance between the shaft (8) and the seat (6), when the bush (9) is mounted on the hinge assembly.

12. A door hinge assembly for a household appliance comprising at least a bush (9) according to claim 11.
